(19) Europäisches Patentamt
European Patent Office
Office européen des brevets

(11) EP 0 697 010 B1

(12) EUROPEAN PATENT SPECIFICATION

(45) Date of publication and mention
of the grant of the patent:
02.12.1998 Bulletin 1998/49

(51) Int Cl.6: C01B 33/36

(21) Application number: 94916938.7

(86) International application number:
PCT/EP94/01439

(22) Date of filing: 28.04.1994

(87) International publication number:
WO 94/26662 (24.11.1994 Gazette 1994/26)

(54) ALUMINOSILICATES

ALUMOSILIKATE

ALUMINOSILICATES

(84) Designated Contracting States:
AT BE CH DE DK ES FR GB GR IE IT LI NL PT SE

(30) Priority: 07.05.1993 EP 93303546

(43) Date of publication of application:
21.02.1996 Bulletin 1996/08

(73) Proprietor: CROSFIELD LIMITED
Warrington, Cheshire WA5 1AB (GB)

(72) Inventor: ARAYA, Abraham
Wirral Merseyside L63 3HY (GB)

(74) Representative:
Collingwood, Anthony Robert et al
ICI Group Intellectual Property
P.O. Box 11
The Heath
Runcorn Cheshire WA7 4QE (GB)

(56) References cited:
EP-A- 0 384 070          EP-A- 0 565 364
FR-A- 2 609 705

**Description**

Field of the Invention

The invention describes the preparation of alkali metal aluminosilicates, in particular crystalline aluminosilicates having the P-structure. These materials are of value as a component in detergent formulations in which they remove calcium and magnesium hardness ions by ion exchange. They also have other properties which provide additional benefits when used in detergent formulations. These aluminosilicates will be referred to as zeolite P in this description.

Background of the Invention

While the utility of zeolite P in detergent formulations has been acknowledged, for example in European Patent Application 0384070 (Unilever), they must be manufactured by a commercially effective process in order to become available on the market place. Thus, while the properties of a material may make it a useful commercial commodity, its manufacture has to be optimised for large scale production.

The zeolite P class includes a series of synthetic zeolite phases which may be in cubic configuration (also termed B or $P_c$) or tetragonal configuration (also termed $P_1$) but is not limited to these forms. The structure and characteristics of the zeolite P class are given in "Zeolite Molecular Sieves" of Donald W Breck (published 1974 and 1984 by Robert E Krieger of Florida USA). The zeolite P class has the typical oxide formula:

$$M_{2/n}O.\ Al_2O_3.\ 1.80 - 5.00\ SiO_2.\ 5H_2O$$

M is an n-valent cation which for this invention is an alkali metal, that is lithium, potassium, sodium, caesium or rubidium with sodium and potassium being preferred and sodium being the cation normally used in commercial processes.

Thus sodium may be present as the major cation with another alkali metal present in a minor proportion to provide a specific benefit.

In EP-A-384,070 is disclosed a process for manufacturing zeolite P having a silicon to aluminium atomic ratio not exceeding 1.33 wherein a sodium aluminate solution, having a $Na_2O:Al_2O_3$ molar ratio from 1.4 to 2.0, is mixed with a sodium silicate solution, having a $SiO_2:Na_2O$ molar ratio from 0.8 to 3.4, at a temperature from 25°C to boiling point and with vigorous stirring to give a gel having the following composition:

$$(2.3-7.5)\ Na_2O,\ (1.75-3.5)\ SiO_2,\ Al_2O_3,\ (80-450)\ H_2O.$$

The gel is then aged for 0.5 to 10 hours at a temperature above 70°C, the crystalline sodium aluminosilicate thus formed being then washed and dried.

This process, with such a gel composition, even though being suitable for producing zeolite P on a bench scale, can't always be directly transposed to industrial scale.

For some industrial applications requiring large volume production, such as for detergents applications, an industrial scale is defined by a series of compulsory conditions most of them relating to the fact that no batch production process is economic if run in a reactor of less than $2m^3$ (i.e a gel volume of about $1.5m^3$ ).

Another parameter, essential in any industrial process, is the yield of the reaction. The yield can be defined as the ratio (mass of zeolite (on dry basis)/mass of reagents). Therefore for a typical zeolite P of the formula:

$$Na_2O,\ 2\ SiO_2,\ Al_2O_3$$

obtained for example from a gel having the following composition:

$$4\ Na_2O,\ 2.2\ SiO_2,\ Al_2O_3,\ n\ H_2O$$

the yield can be calculated as follows

$$Yield = (62 + 120 + 102)\ /\ (\ 248 + 132 + 102 + n * 18)$$

$$= 284 / (482 + 18 * n)$$

Thus the limiting factor is the water content of the gel, i.e the dilution. In order to achieve an economical yield, it is therefore not reasonable to work with a too high dilution. Typically n must be below 250. The first limiting factor is therefore the dilution of the gel and it has now been found that everything else being equal, depending only on the dilution it is possible to produce zeolite P or zeolite A or a mixture thereof.

Another parameter also directly related to the size of the reactor is the mixing of the sodium aluminate and sodium silicate solutions and the stirring of the resulting solution.

The mixing can be defined by the order of addition (e.g. the sodium aluminate added in a pool of sodium silicate or vice versa, or simultaneous addition of both reactants in a batch reactor) and the rate of addition. It takes obviously longer to add 1000 litres in a pool of 1000 litres than to add 1 litre in a pool of 1 litre and it has now been found that for a given gel composition, once the mixing of the two solutions has been completed, depending on the mixing and stirring conditions anyone of pure zeolite P, a mixture of zeolite P and zeolite A or pure zeolite A can be obtained. One of the problems is that the vigourous stirring which can be achieved on a bench scale, and which allows the formation of zeolite P instead of zeolite A, can't always be achieved when stirring a $1.5m^3$ pool, or bigger. A second limiting factor is therefore the limited stirring efficiency which can be achieved in a large-size reactor.

Keeping in mind the two above-mentioned parameters (dilution and mixing/stirring) it has now been found that it is in any case impossible to produce pure zeolite P with a gel dilution n below 250 for a $SiO_2/Al_2O_3$ molar ratio of the gel below 2.1 if the gel has a volume of above $1.5m^3$.

Now it has been found that, if zeolite A is produced together with zeolite P, the characteristics of the zeolite P (in term of Calcium uptake rate and Calcium binding capacity) are not significantly better than those of zeolite A. The presence of Zeolite A can be detected by XRD.

Therefore if a Zeolite P of good quality is to be obtained by mixing sodium silicate, sodium aluminate, one of the essential features of the process is that no zeolite A be produced.

There is therefore a need for a process allowing the production of good quality zeolite P in pools of more than $1.5m^3$.

The present invention provides a process for preparing crystalline P-zeolites having $SiO_2/Al_2O_3$ molar ratio of less than 2.66.

General Description of the Invention

It is an object of the present invention to provide a process for manufacturing an alkali metal aluminosilicate of zeolite P type having the oxide formula

$$M_{2/n}O,\ Al_2O_3,\ 2.0\text{-}2.66\ SiO_2,\ y\ H_2O$$

y being the water content, wherein sodium silicate, sodium aluminate and sodium hydroxide are mixed together to produce a gel having the general formula:

$$2.5\text{-}7.5\ Na_2O,\ 2.2\text{-}3.0\ SiO_2,\ Al_2O_3,\ 80\text{-}250\ H_2O$$

and a volume of more than $1.5m^3$,
no XRD detectable zeolite A being produced and no zeolite P being added, the product being eventually filtered washed and dried.

Standard Procedures

In the characterisation of the zeolite-P materials prepared by the present process the following methods were used.

i. Average Particle size (APS): The average particle size (microns) was measured by a Malvern Mastersizer (Trade Mark) obtainable from Malvern Instruments, England and expressed as the $d_{50}$, i.e. 50% by weight of the particles have a diameter smaller than the diameter quoted. The definitions $d_{80}$ and $d_{90}$ may also be used in association with the appropriate figure. Prior to measuring the particle size, the sample is dried as a thin layer (about 1.5 mm) at 110°C for two hours in a fan oven.

ii. Calcium uptake rate (CUR): The rate of removal of $Ca^{++}$ ions from a wash liquor is an important characteristic of a detergency builder. The time, in seconds, is determined for a zeolite, at a concentration of $1.48 \text{gdm}^{-3}$ and a temperature of 25°C, to reduce the calcium ion concentration in a 0.01M sodium chloride solution from an initial value of $2 \times 10^{-3}$ M to $10^{-5}$M. The zeolite was first equilibrated to constant weight over saturated sodium chloride solution and the water content measured.

iii. Calcium effective binding capacity (CEBC): The CEBC was measured in the presence of a background electrolyte to provide a realistic indicator of calcium ion uptake in a wash liquor environment. A sample of each zeolite was first equilibrated to constant weight over saturated sodium chloride solution and the water content measured. Each equilibrated sample was dispersed in water ($1 \text{cm}^3$) in an amount corresponding to 1 g $\text{dm}^{-3}$ (dry), and the resulting dispersion ($1 \text{ cm}^3$) was injected into a stirred solution, consisting of 0.01M NaCl solution ($50 \text{ cm}^3$) and 0.05M $CaCl_2$ ($3.923 \text{ cm}^3$), therefore producing a solution of total volume $54.923 \text{ cm}^3$. This corresponded to a concentration of 200 mg CaO per litre, i.e. just greater than the theoretical maximum amount (197 mg) that can be taken up by a zeolite of Si:Al ratio 1.00. The change in $Ca^{2+}$ ion concentration was measured by using a $Ca^{2+}$. ion selective electrode, the final reading being taken after 15 minutes. The temperature was maintained at 25°C throughout. The $Ca^{2+}$. ion concentration measured was subtracted from the initial concentration, to give the effective calcium binding capacity of the zeolite sample as mg CaO/g zeolite.

iv. Oil absorption (OA): This was determined by the ASTM spatula rub-out method (American Standards of Test Materials D281). The test is based on the principle of mixing linseed oil with the particulate zeolite by rubbing with a spatula on a smooth surface until a stiff putty like paste is formed which will not break or separate when it is cut with the spatula. The weight of oil used is then put into the equation:

In order to measure the oil absorption of the product, the washed filter cakes obtained after crystallisation were merely dried at room temperature as a thin layer of about 2mm until a solids content of at least 78% by weight was achieved, normally this was achieved in 2-3 days.

v. The form of the zeolite which was produced was established using standard XRD method.

Specific Description of the Invention

Examples of processes of the invention will now be given to illustrate but not limit the invention.

Example 1

This example illustrates the influence of stirring on zeolite formation.
A reaction gel with a molar oxide composition of

$$4.3 \text{ Na}_2\text{O}, 2 \text{ SiO}_2, \text{Al}_2\text{O}_3, 188 \text{ H}_2\text{O}$$

was prepared as follows:
1600 g of 2M sodium hydroxide solution and 517g of commercial sodium aluminate solution (20% $Na_2O$, 20% $Al_2O_3$) were placed in a five litre baffled flask connected to a reflux condenser. The resultant solution was then stirred and heated to 90°C.
431g of commercial sodium silicate solution (28.3% $SiO_2$, 13.8% $Na_2O$) was diluted with 1362 g of deionized water. The diluted silicate solution was heated to 75°C and added to the stirred aluminate caustic solution. The resultant reaction mixture gel was allowed to react at 90°C with stirring for 5 hours. The product was then filtered, washed and dried.
A first sample was produced with a stirring speed of 500 rpm, the silicate solution being added to the stirred aluminate caustic solution over 20 minutes, this stirring speed and this addition time being considered to be representative of the stirring conditions and addition time which can be achieved at an industrial scale. Zeolite A was produced.
A second sample, using a 1-litre gel having the same composition as in first sample, was produced with a stirring speed of 1200 rpm and an addition of below 5 minutes. Zeolite P was produced.
A third sample was produced using a $1.5\text{m}^3$ gel, in a $2\text{m}^3$ vessel, with suitable increased quantities of reactants in order to produce a gel having the same composition as above (i.e. $4.3 \text{ Na}_2\text{O}, 2 \text{ SiO}_2, \text{Al}_2\text{O}_3, 188 \text{ H}_2\text{O}$).
The resultant gel was stirred at 120 rpm, the silicate solution being added to the stirred aluminate caustic solution over 20 minutes. Zeolite A was produced.
It is therefore proven that, only depending on addition time and stirring speed it is possible to produce zeolite A or zeolite P. Since the required conditions (stirring and addition) to produce zeolite P on a bench scale (2 litres) can't always be achieved on an industrial scale (gel of above 1.5m$^3$) it is necessary to find the gel composition which allows the formation of zeolite P on an industrial scale.

Example 2

Different samples were produced in a 5 litre baffled flask as disclosed in example 1, the stirring speed being 500rpm and the silicate solution being added to the stirred aluminate caustic solution over 20 minutes.

The results are summarized in the following Table 1 which disclosed the gel molar composition as well as the type of zeolite which has been produced (A, P, A and P) and the yield of the manufacturing process.

Table 1

| Sample | SiO$_2$ | Al$_2$O$_3$ | Na$_2$O | H$_2$O | Type of zeolite | Yield (%) |
|--------|---------|-------------|---------|--------|-----------------|-----------|
| 1 | 2.1 | 1 | 4.4 | 188 | A+P | 7.5 |
| 2 | 2.1 | 1 | 4.1 | 125 | A+Trace P | 10.5 |
| 3 | 2.1 | 1 | 3.8 | 100 | A | 12.4 |
| 4 | 2.2 | 1 | 4.4 | 188 | P | 7.5 |
| 5 | 2.2 | 1 | 4.1 | 125 | P | 10.5 |
| 6 | 2.2 | 1 | 3.4 | 75 | A | 16 |
| 7 | 2.4 | 1 | 4.4 | 188 | P | 7.4 |
| 8 | 2.4 | 1 | 4.4 | 150 | P | 9.0 |
| 9 | 2.4 | 1 | 4.1 | 125 | P | 10.4 |
| 10 | 2.4 | 1 | 3.8 | 100 | P | 12.3 |
| 11 | 2.4 | 1 | 3.4 | 75 | P+A | 15.9 |
| 12 | 2.7 | 1 | 4.4 | 188 | P | 7.5 |
| 13 | 2.7 | 1 | 4.4 | 150 | P | 10.6 |
| 14 | 2.7 | 1 | 3.8 | 100 | P | 12.5 |

It is immediately apparent that using the stirring and addition conditions which prevail on an industrial scale, it is not possible to produce pure zeolite P from a gel composition having a SiO$_2$/Al$_2$O$_3$ molar ratio of 2.1. It is also apparent that, for a given SiO$_2$/Al$_2$O$_3$ gel molar ratio, the higher is the dilution, the easier it is to produce zeolite P.

Nevertheless, it is not enough to produce zeolite P, this zeolite must exhibit good characteristics, particularly in term of Calcium Uptake Rate (CUR in seconds), Calcium Effective Binding Capacity (CEBC in mg/g), Oil Absorption (OA in g oil/ 100g zeolite). These characteristics of the zeolites which have been produced, together with their average particle size (in μm) and their SiO$_2$/Al$_2$O$_3$ molar ratio, are summarized in the following Table 2.

Table 2

| Sample | SiO$_2$/Al$_2$O$_3$ | APS | CUR | CEBC | OA |
|--------|---------------------|------|------|------|-----|
| 1 | 2.07 | 5 | 80 | 145 | 70 |
| 2 | 2.07 | 6 | 107 | 135 | 65 |
| 3 | 2.07 | 7 | >200 | 130 | 60 |
| 4 | 2.10 | 0.9 | 8 | 160 | 90 |
| 5 | 2.10 | 1.0 | 10 | 158 | 89 |
| 6 | 2.10 | 6 | >200 | 135 | 60 |
| 7 | 2.15 | 0.85 | 7 | 160 | 92 |
| 8 | 2.15 | 0.90 | 6 | 159 | 89 |
| 9 | 2.15 | 1.0 | 8 | 160 | 88 |

Table 2   (continued)

| Sample | $SiO_2/Al_2O_3$ | APS | CUR | CEBC | OA |
|---|---|---|---|---|---|
| 10 | 2.15 | 1.2 | 11 | 157 | 85 |
| 11 | 2.15 | 5 | 120 | 140 | 68 |
| 12 | 2.25 | 0.90 | 7 | 158 | 89 |
| 13 | 2.25 | 0.95 | 8 | 156 | 91 |
| 14 | 2.25 | 0.90 | 7 | 155 | 90 |

Looking at samples 1 and 11 it can be noticed that, even though zeolite P is produced, the presence of trace of zeolite A is sufficient to significantly reduce the characteristics of the obtained zeolite P. In order to obtain a good quality zeolite P it is therefore essential that no XRD detectable zeolite A be produced.

Example 3

This example illustrates that it is completely possible to produce zeolite P on an industrial scale in a batch process. A 1.5m$^3$ gel having the following composition:

$$4.5\ Na_2O,\ 2.4\ SiO_2,\ Al_2O_3,\ 188\ H_2O$$

was produced according to the process disclosed in Example 1, third sample. Pure zeolite P was produced.

A 20m$^3$ gel having the same composition was produced according to the process disclosed in Example 1, third sample, with suitable increase in quantities of reactants. Pure zeolite P was produced.

**Claims**

1.  Process for manufacturing an alkali metal aluminosilicate of zeolite P type having the oxide formula

$$M_{2/n}O,\ Al_2O_3,\ 2.0\text{-}2.66\ SiO_2,\ y\ H_2O$$

y being the water content, wherein sodium silicate, sodium aluminate and sodium hydroxide are mixed together to produce a gel having the general formula:

$$2.5\text{-}7.5\ Na_2O,\ 2.2\text{-}3.0\ SiO_2,\ Al_2O_3,\ 80\text{-}250\ H_2O$$

and a volume of more than 1.5m$^3$,
no XRD detectable zeolite A being produced and no zeolite P being added, the product being eventually filtered washed and dried.

**Patentansprüche**

1.  Verfahren zur Erstellung eines Alkalimetall-Aluminosilicats vom Zeolith P-Typ mit der Oxidformel

$$M_{2/n}O,\ Al_2O_3,\ 2,0\text{-}2,66\ SiO_2,\ y\ H_2O,$$

worin y der Wassergehalt ist, bei dem Natriumsilicat, Natriumaluminat und Natriumhydroxid vermischt werden, so daß ein Gel erhalten wird, das die allgemeine Formel aufweist:

$$2,5\text{-}7,5 \ Na_2O, \ 2,2\text{-}3,0 \ SiO_2, \ Al_2O_3, \ 80\text{-}250 \ H_2O$$

sowie ein Volumen von mehr als 1,5 m$^3$,
wobei kein durch Röntgenbeugung nachweisbarer Zeolith A hergestellt wird und kein Zeolith P zugesetzt wird,
wobei das Produkt abschließend filtriert, gewaschen und getrocknet wird.

**Revendications**

1. Procédé de fabrication d'un aluminosilicate de métal alcalin de type zéolite P ayant la formule d'oxydes suivante :

$$M_{2/n}O, \ Al_2O_3, \ 2,0\text{-}2,66 \ SiO_2, \ y \ H_2O$$

y étant la teneur en eau, où du silicate de sodium, de l'aluminate de sodium et de l'hydroxyde de sodium sont mélangés conjointement pour produire un gel ayant la formule générale :

$$2,5\text{-}7,5 \ Na_2O, \ 2,2\text{-}3,0 \ SiO_2, \ Al_2O_3, \ 80\text{-}250 \ H_2O$$

et un volume de plus de 1,5 m$^3$,
aucune zéolite A détectable par XRD n'étant produite et aucune zéolite P n'étant ajoutée, le produit étant ensuite filtré, lavé et séché.